# EUROPÄISCHE PATENTSCHRIFT

(11) **EP 1 280 688 B1**
(45) Veröffentlichungstag und Bekanntmachung des Hinweises auf die Patenterteilung: **22.10.2003**
(21) Anmeldenummer: 01947246.3
(22) Anmeldetag: 27.04.2001
(51) Int. Cl.: B60V 1/08

(54) **BODENEFFEKT-FAHRZEUG**
GROUND-EFFECT VEHICLE
VEHICULE A EFFET DE SOL

(30) Priorität: 05.05.2000 DE 20008151 U
(43) Veröffentlichungstag der Anmeldung: 05.02.2003
(73) Patentinhaber: Botec Ingenieursozietät GmbH, 64401 Gross-Bieberau (DE)
(72) Erfinder: JÖRG, Günther, W., 64401 Gross-Bieberau (DE)
(74) Vertreter: Helber, Friedrich G., Dipl.-Ing.
(86) Internationale Anmeldenummer: EP0104773
(87) Internationale Veröffentlichungsnummer: WO01085515

(56) Entgegenhaltungen:
- CH-A- 137 376
- US-A- 2 364 676
- US-A- 3 141 436
- US-A- 3 463 108
- US-A- 5 622 133
- US-A- 5 860 620

## Beschreibung

Die Erfindung betrifft ein unter Ausnutzung des Bodeneffekts in geringem Abstand über einer Wasserfläche oder festem Untergrund durch einen Propeller- oder Düsen-Hauptantrieb ohne direkte Bodenberührung schwebend verfahrbares, als Stauflügel-Fahrzeug ausgebildetes Bodeneffekt-Fahrzeug, welches mit während des bestimmungsgemäßen Antriebs des Fahrzeugs durch den Hauptantrieb in dessen Rumpf bzw. die Stauflügel einziehbaren, für eine Bewegung ohne Hauptantrieb jedoch in oder auf den jeweiligen Untergrund ausfahrbaren und zumindest zum Teil aktiv motorisch antreibbare Antriebs- und Manövriereinheiten versehen ist.

Neben den bereits seit Jahrzehnten im Einsatz befindlichen Bodeneffekt-Fahrzeugen nach Art der Luftkissen-Fahrzeuge haben in den letzten Jahrzehnten zunehmend solche Fahrzeuge das Interesse der Fachwelt gefunden, bei denen das tragende Luftkissen während des Betriebs aufgrund der relativ hohen Vortriebsgeschwindigkeit des Fahrzeugs selbst erzeugt wird, wobei dieses Luftkissen auf die Unterseite von seitlich vom Fahrzeugrumpf vortretende Flügelpaare geringer Spannweite einwirkt. Insbesondere so genannte 'Stauflügelboote mit Tandemflügeln', d.h. wasserstartende, luftgetragene Fahrzeuge mit zwei im Abstand voneinander und hintereinander in etwa gleicher Höhe an einem Rumpf angeordnete Tragflächenpaaren, deren freien Enden durch je eine flache Endscheibe miteinander verbunden sind (DE-AS 17 56 013; DE-AS 23 03 972), haben nicht nur im Modell, sondern als größere, für den Transport von Personen eingesetzte Einheiten gezeigt, dass solche Fahrzeuge als Schnellverkehrs-Transportmittel geeignet sind, welche den auch 'Flairen' genannten Bodeneffekt-Tiefflug im Freiraum über Niedrig-Wasserflächen, Meeren, Flüssen, Eis- und Schneeflächen, aber auch über ebenen Wüsten oder Moorgebieten mit einer sehr komfortablen stoßfreien Reisefluggeschwindigkeit grundsätzlich ermöglichen. Als Antrieb für die bisher entwickelten Stauflügelboote werden Luftschrauben-Antriebe verwendet, deren von einem Heck-Haupt-Antriebsmotor angetriebene Luftschraube zwischen einer Seitenleitwerksflosse und einem Seitenruder angeordnet ist. Dass die bekannten Stauflügelboote bisher nahezu ausschließlich als wasserstartende und -landende Fahrzeuge eingesetzt werden, hat seine Ursache im wesentlichen in diesem Luftschrauben-Antrieb. Zum Starten und Landen des Fahrzeugs auf festem Untergrund ist zwar vorstellbar, dass - wie bei Flugzeugen - ein während des Flugbetriebs einziehbares Räderfahrwerk vorgesehen wird. Ein Manövrieren auf festem Untergrund ist dann aber - ebenso wie bei Flugzeugen - nur auf speziellen Landebahnen gefahrlos möglich, weil der vom Propeller des Hauptantriebs erzeugte Luftstrom zur gefahrenträchtigen Aufwirbelung von Gegenständen und zur Beeinträchtigung der Befindlichkeit von Personen bis zu Verletzungen führen kann. Auch beim Start und der Landung der bekannten Stauflügelboote im Wasser sind solche Nachteile durch den Luftstrom des Propellers gegeben. Ein Starten und Landen in einem normalen Hafen oder anderen Gewässern mit weiteren Wasserfahrzeugen ist problematisch, weil beispielsweise kleinere Boote und Segelboote durch den Luftstrom zum Kentern gebracht werden. Beim Anfahren des Kais können dann auch vom Luftstrom erfasste Personen zu Fall gebracht oder Gegenstände durch die Luft geschleudert werden.

Bei primär für den Einsatz auf Wasserflächen vorgesehenen Bodeneffekt-Fahrzeugen ist es, z.B. aus der US 5 662 133 A bekannt, zum Verfahren des Fahrzeugs auf festem Untergrund zusätzlich ein einziehbares und ausfahrbares Räderfahrwerk vorzusehen. auch ein aktiver motorischer Antrieb der Räderfahrwerke solcher Fahrzeuge ist vorbeschrieben (US 5 860 620 A). Bei den im Aufbau und der Funktion abweichenden Luftkissenfahrzeugen ist es darüber hinaus auch bekannt (US 31 41 436 A), neben einem zusätzlichen Räderfahrwerk für das Manövrieren auf festem Untergrund zusätzlich in Wasser eintauchende Schraubenantriebe vorzusehen.

Der Erfindung liegt demgegenüber die Aufgabe zugrunde, speziell die hier in Frage stehenden, als Stauflügel-Fahrzeuge ausgebildeten bekannten Bodeneffekt-Fahrzeuge so weiterzubilden, dass die beim Starten und Landen des Fahrzeugs auf dem Wasser und beim anschließenden Verfahren und Manövrieren des Fahrzeugs im Wasser bzw. auch auf festem Untergrund die geschilderten Nachteile nicht auftreten, wobei die für den Antrieb und das Manövrieren der Fahrzeuge auf einer Wasserfläche bzw. festem Untergrund ohne Bodeneffekt erforderlichen zusätzlichen Antriebs- und Manövriereinheiten möglichst weitgehend an die jeweils gegebenen Bedingungen anpassbar sind.

Ausgehend von einem Bodeneffekt-Fahrzeug der eingangs erwähnten Art wird diese Aufgabe erfindungsgemäß dadurch gelöst, dass der motorische Antrieb für die aktiv motorisch angetriebenen Betätigungs- und Manövriereinheiten jeweils einen den Antriebsmotor mit der zugeordneten Antriebs- und Manövriereinheit verbindenden hydraulischen Antrieb aufweist. Durch die Verwendung eines hydraulischen Antriebs ist ein den jeweiligen Umgebungsbedingungen feinfühlig anpassbarer Antrieb möglich.

Der hydraulische Antrieb weist dabei vorzugsweise wenigstens eine vom Hauptantriebsmotor des Bodeneffekt-Fahrzeugs oder einem gesonderten Hilfs-Antriebsmotor angegriebene hydraulische Pumpe auf, welche über Verbindungsleitungen mit wenigstens einem zugeordneten hydraulischen Motor verbunden ist.

Von Vorteil ist dabei eine Ausgestaltung des hydraulischen Antriebs als hydrostatischer Antrieb mit wenigstens einer volumetrisch arbeitenden Verdrängerpumper und wenigstens einem volumetrisch arbeitenden Verdrängermotor.

Dabei ist es dann zweckmäßig, wenn der hydraulische Antrieb zur Drehrichtungsumkehr des Hydraulikmotors bzw. der Hydraulikmotoren reversierbar ausgebildet ist, was entweder durch Anordnung eines entsprechenden Wegeventils in den Verbindungsleitungen von der Hydraulikpumpe zum Hydraulikmotor oder durch Drehrichtungsumkehr des Antriebs der Hydraulikpumpe möglich ist. Solche Hydraulikpumpen können beispielsweise als fördermengenveränderliche Hydraulikpumpen, ausgebildet sein, deren Förderrichtung umkehrbar ist, wie sie in hydrostatischen Getrieben in Form von Schrägscheiben-Kolbenpumpen mit veränderlicher Einstellung des Winkels des Zylinderblocks relativ zur die Kolben mitnehmenden Schrägscheibe eingesetzt werden.

Zum Verfahren auf festem Untergrund ist die Ausgestaltung dabei vorzugsweise so getroffen, dass die Antriebs- und Manövriereinheiten ein während des bestimmungsgemäßen Antriebs des Fahrzeugs durch den Hauptantrieb in dessen Rumpf bzw. Stauflügel einziehbares, für eine Bewegung ohne Hauptantrieb jedoch in oder auf den jeweiligen Untergrund ausfahrbares Räderfahrwerk mit wenigstens einem etwa mittig im, in Fahrtrichtung vorderen Bereich des Rumpfs angeordneten lenkbaren Bugrad und zwei auf gegenüberliegenden Seiten der senkrechten Längsmittelebene des Rumpfs in den Heckbereich versetzt angeordneten Heckrädern aufweisen, wobei zumindest ein Teil der Räder des Räderfahrwerks mit dem motorischen Antrieb koppelbar ist, wodurch das Verfahren des Fahrzeugs auf festem Untergrund bei abgeschalteter Luftschraube möglich wird. Dabei empfiehlt es sich dann auch, zumindest einen Teil der Räder mit Bremsvorrichtungen zu versehen.

Das Bugrad bzw. die Bugräder ist bzw. sind dann zweckmäßig am bodenseitigen Ende einer im wesentlichen rechtwinklig zum Untergrund verlaufenden Trägerachse angeordnet, die in den Rumpf einziehbar und aus dem Rumpf ausfahrbar und zumindest in ausgefahrenem Zustand um ihre Längsmittelachse im Rumpf verdrehbar gelagert ist, wobei zur Veränderung der relativen Drehstellung der Trägerachse im Rumpf und somit der Richtungssteuerung des Fahrzeugs im Fahrbetrieb auf festem Untergrund eine durch das Personal des Fahrzeugs bedienbare Steuereinrichtung vorgesehen ist.

Bei einem als Stauflügel-Fahrzeug mit Tandemflügeln ausgebildeten Bodeneffekt-Fahrzeug werden die Heckräder dann zweckmäßig jeweils im rumpfabgewandten Endbereich des rückwärtigen Flügelpaars angeordnet, wobei sie ins Innere des rückwärtigen Flügelpaars einziehbar und in eine von der Unterseite des Flügels vorstehende Position ausfahrbar am bzw. im jeweiligen Flügel gehaltert sind.

Für den Antrieb und das Manövrieren des schwimmenden Fahrzeugs, beispielsweise im Hafen, ist das erfindungsgemäße Bodeneffekt-Fahrzeug mit Vorteil mit einem Schraubenantrieb mit mindestens einer, vorzugsweise zwei voneinander beabstandet am Rumpf oder den Stauflügeln angeordneten, motorisch antreibbaren Schiffsschraube(n) versehen.

Wenigstens eine der motorisch antreibbaren Schiffsschrauben ist dann in ausgefahrener, ins Wasser eintauchender Position um eine im wesentlichen rechtwinklig zur Wasseroberfläche verlaufende Trägerachse drehbar gelagert, wobei zur Veränderung der relativen Drehstellung der Trägerachse im Rumpf für die Richtungssteuerung des Fahrzeugs beim Antrieb durch die Schiffsschraube im Wasser wiederum eine vom Bedienungspersonal des Fahrzeugs bedienbare Steuereinrichtung vorgesehen ist.

Der Schraubenantrieb kann beispielsweise zwei in Längsrichtung voneinander beabstandete, motorisch antreibbare, in den Rumpf einziehbare und aus dem Rumpf ausfahrbare Schiffsschrauben aufweisen. Wenn das erfindungsgemäße Bodeneffekt-Fahrzeug als Stauflügel-Fahrzeug ausgebildet ist, kommt alternativ auch die Anordnung jeweils einer motorisch antreibbaren Schiffsschraube in den rumpfabgewandten Endbereich eines Flügelpaars des Stauflügel-Fahrzeugs in Frage. Bei Stauflügel-Fahrzeugen mit Tandemflügel sind die Schiffsschrauben dann zweckmäßig jeweils im rumpfabgewandten Endbereich des rückwärtigen Flügelpaars angeordnet.

Um die Bodeneffekt-Fahrzeuge der hier in Frage stehenden Art universell einsetzbar zu machen, d.h. sowohl im Wasser als auch auf festem Untergrund vor dem Start und nach der Landung manövrieren zu können, ist in erfindungsgemäßer Weiterbildung vorgesehen, dass sowohl ein Räderfahrwerk als auch ein Schraubenantrieb vorgesehen sind.

Die hydraulischen Motoren der Antriebe für das Räderfahrwerk werden zweckmäßig als Radnabenmotoren ausgebildet, die also unmittelbar an bzw. in den Rädern des Räderfahrwerks angeordnet sind.

Den Antriebs- und Manövriereinheiten sind dann bevorzugt hydraulische Betätigungsorgane zum Einziehen und Ausfahren zugeordnet. Das hierfür erforderliche hydraulische Druckmittel steht aufgrund der hydraulischen Antriebe ja ohnehin zur Verfügung.

Zweckmäßig werden die hydraulischen Betätigungsorgane von Kolben-Zylinder-Einheiten gebildet.

Da die Antriebs- und Manövriereinheiten voraussetzungsgemäß beim normalen Flugbetrieb zur Minimierung der Luftwiderstände in das Fahrzeug eingezogen sein müssen, sind diesen Antriebs- und Manövriereinheiten zweckmäßig hydraulische Betätigungselemente, beispielsweise in Form von hydraulischen Kolben-Zylinder-Einheiten zum Ausfahren und Einziehen zugeordnet.

Die Erfindung ist in der folgenden Beschreibung eines Ausführungsbeispiels näher erläutert, und zwar zeigt:
- Fig. 1: eine Seitenansicht eines als Stauflügelboot in Tandembauweise ausgebildeten erfindungsgemäßen Bodeneffekt-Fahrzeugs;
- Fig. 2: eine Draufsicht auf das in Figur 1 gezeigte Stauflügelboot;
- Fig. 3: eine Seitenansicht des Heckbereichs des Stauflügelboots in vergrößertem Maßstab;
- Fig. 4: einen im Bereich des vorderen Endes des vorderen Stauflügel-Paars gelegenen Abschnitt des Stauflügelboots in der Seitenansicht mit einem schematisch dargestellten, in den Rumpf einziehbaren und ausfahrbaren Schraubenantrieb; und
- Fig. 5: einen Teilabschnitt des Stauflügelboots im Bereich des rückwärtigen Stauflügel-Paars in der Seitenansicht mit einem schematisch veranschaulichten, in den Rumpf einschwenkbaren und aus dem Rumpf ausschwenkbaren Schraubenantrieb.

Das in den Zeichnungsfiguren dargestellte, in seiner Gesamtheit mit 10 bezeichnete Ausführungsbeispiel eines erfindungsgemäßen Bodeneffekt-Fahrzeugs ist im dargestellten Fall als Stauflügel-Fahrzeug mit Tandemflügeln ausgebildet, welches einen langgestreckten Rumpf R aufweist, von dessen gegenüberliegenden Seiten im Abstand voneinander und hintereinander in etwa gleicher Höhe ein vorderes Tragflügel-Paar 12a, 12b und ein hinteres Tragflügel-Paar 14a, 14b seitlich vortreten, die durch Endscheiben 16a, 16b verbunden sind.

Die für den Antrieb des Stauflügel-Fahrzeugs 10 im bestimmungsgemäßen Flugbetrieb verwendete Luftschraube 18 ist zwischen einer Seitenleitwerksflosse 20 und einem Seitenruder 22 in einem Spalt 24 angeordnet. Der Antrieb der Luftschraube erfolgt von einem (nicht gezeigten) im Rumpf R des Stauflügel-Fahrzeugs 10 angeordneten Hauptantriebsmotor. Insoweit entspricht das erfindungsgemäße Stauflügel-Fahrzeug 10 den bekannten Stauflügelbooten mit Tandemflügeln.

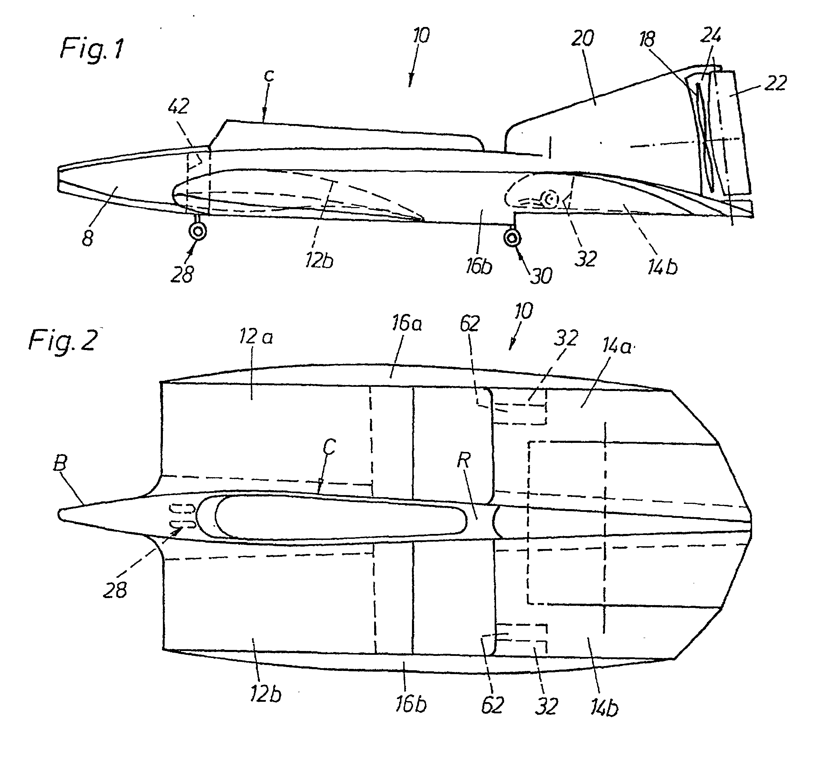

In Weiterentwicklung der bekannten Stauflügelboote weist das erfindungsgemäße Stauflügel-Fahrzeug 10 ein Räderfahrwerk auf, welches von einem unmittelbar vor dem Cockpit C mittig im Bereich des Bugs B des Rumpfs R angeordnetes lenkbares Bugrad 28 und zwei auf gegenüberliegenden Seiten des Rumpfs im rumpfabgewandten Endbereich des rückwärtigen Flügelpaars 14a, 14b angeordnete Heckräder 30 umfasst. Das im speziellen Fall als Bugradpaar ausgebildete Bugrad 28 ist - ebenso wie die Heckräder 30 - aus der in Figur 1 dargestellten ausgefahrenen und somit ein Verfahren des Stauflügel-Fahrzeugs auf festem Untergrund ermöglichenden Stellung in den Rumpf R bzw. das Innere des jeweiligen Heckflügels 14a, 14b einziehbar ausgebildet, um den durch das ausgefahrene Räderfahrwerk erzeugten Vortriebswiderstand des Stauflügel-Fahrzeugs beim Manövrieren im Schwimmbetrieb und während des bestimmungsgemäßen Tiefflug-Betriebs zu vermeiden.

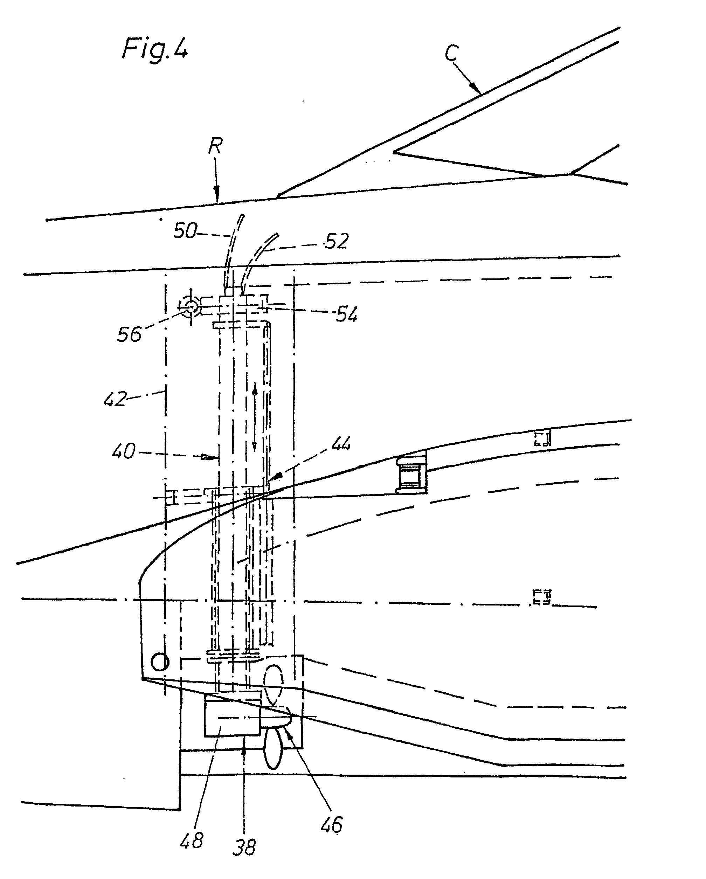

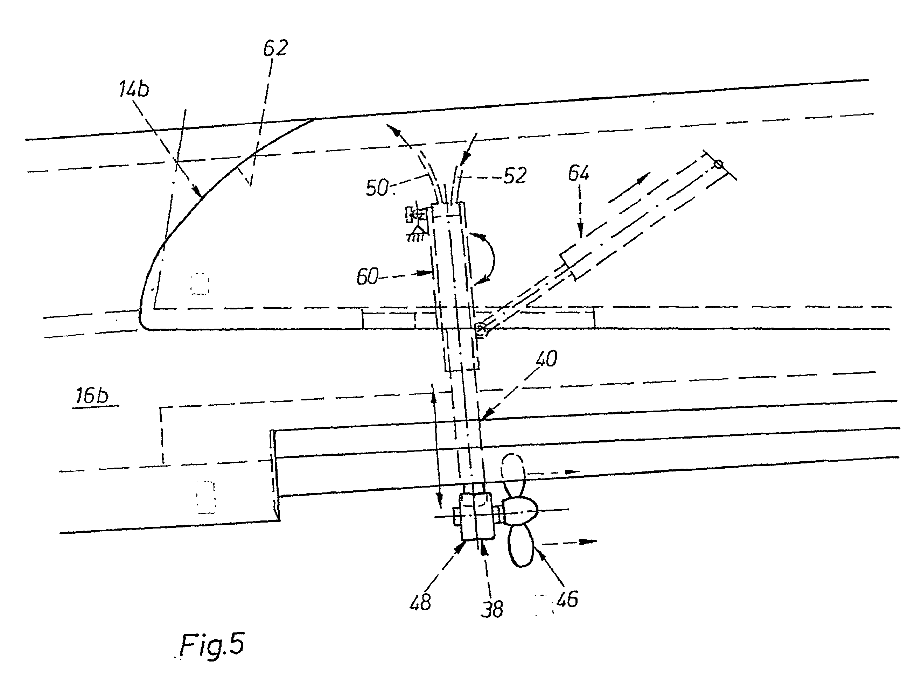

Zum Verfahren des Fahrzeugs auf festem Untergrund werden die Räder 28, 30 des Räderfahrwerks ausgefahren, wobei die Lenkung, d.h. die Fahrtrichtungssteuerung des Stauflügel-Fahrzeugs durch Verdrehen des Bugrad-Paars 28 um eine im wesentlichen senkrechte Achse erfolgt. Da der Propellerantrieb des Stauflügel-Fahrzeugs 10 beim Manövrieren auf festem Untergrund wegen der durch die Luftschraube 18 erzeugten hochenergetischen gerichteten Luftströmung problematisch ist, ist erfindungsgemäß vorgesehen, wenigstens ein Teil der Räder des Räderfahrwerks, z.B. die Heckräder 30, über einen geeigneten Antrieb drehantreibbar auszubilden. Eine der für diesen Antrieb denkbaren Möglichkeiten wird nachstehend noch in Verbindung mit den in den Figuren 4 und 5 veranschaulichten Schraubenantrieben für das Manövrieren des Stauflügel-Fahrzeugs im Schwimmbetrieb erörtert. Festzuhalten ist jedenfalls, dass durch den aktiven Drehantrieb der Räder des Fahrwerks der Propeller- bzw. Luftschraubenantrieb beim Fahrbetrieb auf festem Untergrund abgeschaltet werden kann und somit die Probleme dieses Antriebs vermieden werden.

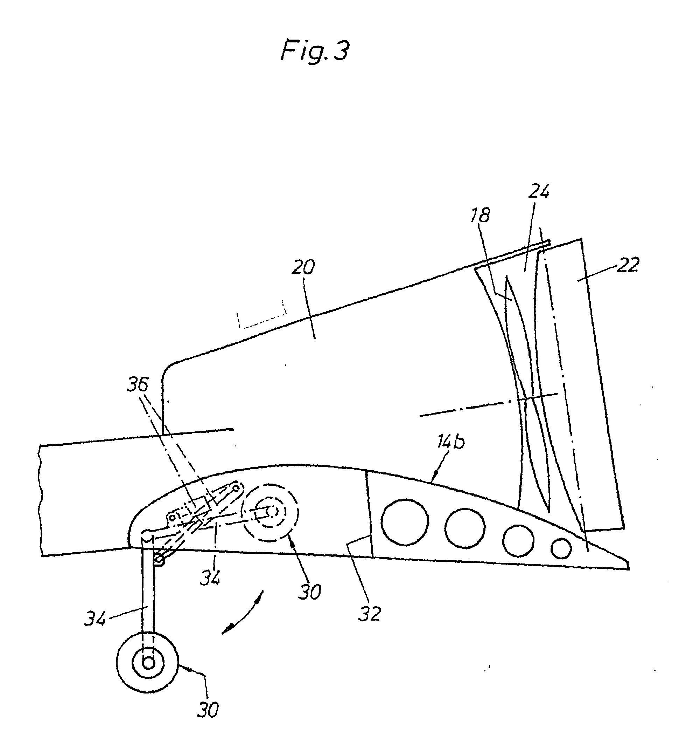

In Figur 3 ist in vergrößertem Maßstab schematisch die ausfahrbare und in ein Fach 32 im jeweiligen Heckflügel 14a bzw. 14b zurückziehbare Anordnung der Heckräder 30 schematisch veranschaulicht. Es ist erkennbar, dass die Heckräder 30 am freien Ende eines am anderen Ende verschwenkbar innerhalb des Fachs 32 im Bereich der vorderen Flügelkante des jeweiligen Heckflügels 14a, 14b gelagerten Lenkers 34 angeordnet sind, wobei eine druckmittelbeaufschlagbare Kolben-Zylinder-Einheit 36 so am Lenker 34 angreift, dass die Verschwenkung zwischen den beiden in Figur 3 veranschaulichten Schwenkstellungen durch entsprechende Beaufschlagung der Kolben-Zylinder-Einheit 36 mit Druckmittel möglich ist.

Nicht dargestellt ist in Figur 3 der Fahrantrieb der Heckräder 30 sowie die zusätzlich (auch im Bugräderpaar 28) vorgesehene Bremsvorrichtung.

In den Figuren 4 und 5 sind die ausfahrbare und einziehbare Ausgestaltung und Anordnung von Schraubenantrieben am bzw. im Stauflügel-Fahrzeug 10 veranschaulicht, welche ein Manövrieren des Fahrzeugs im Schwimmbetrieb mit abgeschalteter Luftschraube 18 ermöglichen.

Figur 4 zeigt dabei die Anordnung eines Schraubenantriebs 38 am unteren Ende einer teleskopisch in Richtung des Doppelpfeils in senkrechter Richtung verlängerbaren bzw. verkürzbaren Trägerachse 40, die drehbar innerhalb eines Schachts 42 im Rumpf R gelagert ist. Die teleskopische Verlängerung bzw. Verkürzung der Trägerachse 40 erfolgt durch eine hydraulische Kolben-Zylinder-Einheit 44, welche durch entsprechende Druckmittelbeaufschlagung eine Verlängerung der Trägerachse 40 in die in Figur 4 veranschaulichte Stellung, in welcher der Schraubenantrieb 38 unterhalb des Rumpfs steht, bzw. eine Verkürzung erlaubt, in welche der Schraubenantrieb 38 in den Schacht 42 im Rumpf R zurückgezogen ist. Die eigentliche Schiffsschraube 46 des Schraubenantriebs 38 ist dabei auf der Abtriebswelle eines Hydraulikmotors 48 angeordnet, dessen Gehäuse am unteren Ende der Trägerachse 40 befestigt ist. Über durch die Trägerachse 40 hindurchgeführte elastische Druckschläuche 50, 52 ist der Hydraulikmotor 48 durch von einer (nicht gezeigten) Hydraulikpumpe geliefertes Hydraulikmedium antreibbar. Am oberen Ende der Trägerachse 40 ist außerdem ein Schneckenrad 54 drehfest angeordnet, welches mit einer Schnecke 56 kämmt, die ihrerseits von einer, vom Bedienungspersonal des Fahrzeugs 10 über einen hydraulischen oder mechanischen Lenkantrieb gesteuert wird. Durch Verdrehung der Trägerachse über den Schneckenantrieb 54, 56 ist also eine Veränderung der Ausrichtung der Längsmittelachse des Schraubenantriebs 38 relativ zur Längsmittelachse des Stauflügel-Fahrzeugs 10 möglich, wodurch also auch die Richtungssteuerung und somit das Manövrieren des im Wasser schwimmenden Stauflügel-Fahrzeugs 10 möglich ist. Grundsätzlich ist ein solches Manövrieren bereits mit einem Schraubenantrieb 38 der geschilderten Art möglich. Zur Verbesserung der Manövrierfähigkeit empfiehlt es sich jedoch, einen dem Schraubenantrieb 38 entsprechenden zweiten Schraubenantrieb in den Heckbereich des Fahrzeugs 10 versetzt im Rumpf vorzusehen.

In Figur 5 ist die alternative Anordnung eines von zwei hydraulischen Schraubantrieben 38 in den äußeren freien Endbereichen der Heckflügel 14a, 14b veranschaulicht, wobei die verdrehbar gelagerte Trägerachse 40 in diesem Fall nicht hydraulisch verlängerbar bzw. verkürzbar ausgebildet ist, sondern die die Trägerachse 40 drehbar lagernde Lagerhülse 60 ihrerseits innerhalb einer Kammer 62 in jedem der Heckflügel 14a, 14b verschwenkbar gelagert und durch eine an der Lagerhülse 60 angreifende Kolben-Zylinder-Einheit 64 aus der in Figur 5 dargestellten ausgeschwenkten Position in die Kammer 62 zurückschwenkbar ist. Die Anordnung zweier Schraubenantriebe 38 jeweils in den freien Endbereichen der Heckflügel 14a, 14b gewährleistet wiederum den Antrieb und das Manövrieren des gewasserten Stauflügel-Fahrzeugs ohne Antrieb durch die Luftschraube 18. Als Antrieb für die Schrauben 46 sind wiederum Hydraulikmotoren 48 vorgesehen, denen das Hydraulikmedium über Hydraulikschläuche 50 und 52 zu- bzw. abgeführt wird.

Anhand der vorbeschriebenen Schraubenantriebe kann nun auch der mögliche Antrieb für das Bugrad 28 bzw. die Heckräder 30 des Räderfahrwerks erläutert werden. Das Bugrad bzw. Bugradpaar 28 wird dann anstelle der Schiffsschraube 46 auf der Abtriebsachse bzw. den beiden an gegenüberliegenden Seiten des Gehäuses des Hydraulikmotors 48 herausgeführten Enden der Abtriebsachse des Hydraulikmotors 48 angeordnet, wobei die Längsmittelachse der Abtriebsachse dann für Geradeausfahrt des Fahrzeugs 10 gegenüber der Darstellung gemäß Figur 4 um plus/minus 90° um die senkrechte Längsmittelachse der Trägerachse 40 verdreht zu denken ist.

Alternativ oder zusätzlich können auch die in Figur 3 ohne eigenen Antrieb dargestellten Heckräder 30 in den äußeren freien Endbereichen der Heckflügel 14a, 14b durch einen Hydraulikmotor drehantreibbar ausgebildet sein, wobei sich dann eine zu dem in Figur 5 veranschaulichten Schraubenantrieb analog verschwenkbare Anordnung der Heckräder 30 an der Trägerachse 40 anbietet. Auf die zusätzliche drehbare Lagerung der Trägerachse 40 kann dann verzichtet werden, wenn die das Bugrad bzw. das Bugradpaar ausfahr- bzw. einziehbar halternde Trägerachse 40 in der in Verbindung mit Figur 4 geschilderten Weise als verdrehbare Lenkachse ausgebildet ist.

In Figur 1 und 2 ist durch die schematische Andeutung von zusätzlichen Fächern 62 in Heckflügeln 14a, 14b veranschaulicht, dass das Stauflügel-Fahrzeug 10 gleichzeitig mit einem Räderfahrwerk und Schraubenantrieben ausgerüstet werden kann, wodurch sowohl eine Verfahrbarkeit und Manövrierbarkeit des Fahrzeugs 10 auf festem Untergrund als auch in gewassertem Zustand ohne Antrieb durch die Luftschraube 18 möglich ist. Auf diese Weise wird dann eine universelle Einsatzmöglichkeit des erfindungsgemäßen Stauflügel-Fahrzeugs 10 sowohl für schnellen Reiseflug als auch das gefahrlose Manövrieren in Hafengebieten oder auf festen Untergründen möglich.

## Patentansprüche

1. Unter Ausnutzung des Bodeneffekts in geringem Abstand über einer Wasserfläche oder festem Untergrund durch einen Propeller- oder Düsen-Hauptantrieb ohne direkt Bodenberührung schwebend verfahrbares, als Stauflügel-Fahrzeug (10) ausgebildetes Bodeneffekt-Fahrzeug, welches mit während des bestimmungsgemäßen Antriebs des Fahrzeugs durch den Hauptantrieb in dessen Rumpf (R) bzw. die Stauflügel (14a, 14b) einziehbaren, für eine Bewegung ohne Hauptantrieb jedoch in oder auf den jeweiligen Untergrund ausfahrbaren und zumindest zum Teil aktiv motorisch antreibbare Antriebs- und Manövriereinheiten versehen ist,
**dadurch gekennzeichnet,**
**dass** der motorische Antrieb für die aktiv motorisch angetriebenen Betätigungs- und Manövriereinheiten jeweils einen den Antriebsmotor mit der zugeordneten Antriebsund Manövriereinheit verbindenden hydraulischen Antrieb aufweist.

2. Bodeneffekt-Fahrzeug nach Anspruch 1, **dadurch gekennzeichnet, dass** der hydraulische Antrieb wenigstens eine vom Hauptantriebsmotor des Bodeneffekt-Fahrzeugs (10) oder einem gesonderten Hilfs-Antriebsmotor angetriebene hydraulische Pumpe aufweist, welche über Verbindungsleitungen (50; 52) mit wenigstens einem zugeordneten hydraulischen Motor (48) verbunden ist.

3. Bodeneffekt-Fahrzeug nach Anspruch 2, **dadurch gekennzeichnet, dass** der hydraulische Antrieb als hydrostatischer Antrieb mit wenigstens einer volumetrisch arbeitenden Verdrängerpumpe und wenigstens einem volumetrisch arbeitenden Verdrängermotor (48) ausgebildet ist.

4. Bodeneffekt-Fahrzeug nach Anspruch 2 oder 3, **dadurch gekennzeichnet, dass** der hydraulische Antrieb zur Drehrichtungsumkehr des hydraulischen Motors (48) bzw. der hydraulischen Motoren (48) reversierbar ausgebildet ist.

5. Bodeneffekt-Fahrzeug nach einem der Ansprüche 1 bis 4, **dadurch gekennzeichnet, dass** die Antriebs- und Manövriereinheiten ein Räderfahrwerk mit wenigstens einem etwa mittig im in Fahrtrichtung vorderen Bereich des Rumpfs (R) angeordneten lenkbaren Bugrad (28) und zwei auf gegenüberliegenden Seiten der senkrechten Längsmittelebene des Rumpfs (R) in den Heckbereich versetzt angeordneten Heckrädern (30) aufweisen.

6. Bodeneffekt-Fahrzeug nach Anspruch 5, **dadurch gekennzeichnet, dass** zumindest ein Teil der Räder (28; 30) des Räderfahrwerks mit dem motorischen Antrieb koppelbar ist.

7. Bodeneffekt-Fahrzeug nach Anspruch 5 oder 6, **dadurch gekennzeichnet, dass** zumindest ein Teil der Räder (28; 30) des Räderfahrwerks mit Bremsvorrichtungen versehen ist.

8. Bodeneffekt-Fahrzeug nach einem der Ansprüche 5 bis 7, **dadurch gekennzeichnet, dass** das Bugrad (28) bzw. die Bugräder am bodenseitigen Ende einer im wesentlichen rechtwinklig zum Untergrund verlaufenden Trägerachse (40) angeordnet ist bzw. sind, dass die Trägerachse (40) in den Rumpf (R) einziehbar und aus dem Rumpf (R) ausfahrbar und zumindest in ausgefahrenem Zustand um ihre Längsmittelachse im Rumpf verdrehbar gelagert ist, und dass zur Veränderung der relativen Drehstellung der Trägerachse im Rumpf für die Richtungssteuerung des Fahrzeugs beim Fahrbetrieb auf festem Untergrund eine Steuereinrichtung vorgesehen ist.

9. Bodeneffekt-Fahrzeug nach einem der Ansprüche 2 bis 8, welches als Stauflügel-Fahrzeug (10) mit Tandemflügeln (12a, 12b; 14a 14b ausgebildet ist, **dadurch gekennzeichnet, dass** die Heckräder (30) jeweils im rumpfabgewandten Endbereich des rückwärtigen Flügelpaars (14a, 14b) angeordnet sind.

10. Bodeneffekt-Fahrzeug nach Anspruch 9, **dadurch gekennzeichnet, dass** die Heckräder (30) ins Innere des rückwärtigen Flügelpaars (14a, 14b) einziehbar und in eine von der Unterseite der Flügel vorstehende Position ausfahrbar am bzw. im jeweiligen Flügel gehaltert sind.

11. Bodeneffekt-Fahrzeug nach einem der Ansprüche 1 bis 4, **dadurch gekennzeichnet, dass** die Antriebs- und Manövriereinheiten einen Schraubenantrieb (38) mit mindestens einer, vorzugsweise zwei voneinander beabstandet am Rumpf (R) oder den Stauflügeln (14a, 14b) angeordneten motorisch antreibbaren Schiffschraube(n) (46) aufweisen.

12. Bodeneffekt-Fahrzeug nach Anspruch 11, **dadurch gekennzeichnet, dass** wenigstens eine der motorisch antreibbaren Schiffschrauben (46) in ausgefahrener, ins Wasser eintauchender Position um eine im wesentlichen rechtwinklig zur Wasseroberfläche verlaufende Trägerachse (40) drehbar gelagert ist bzw. sind, und dass zur Veränderung der relativen Drehstellung der Trägerachse (40) im Rumpf (R) für die Richtungssteuerung des Fahrzeugs (10) beim Antrieb durch die Schiffsschraube(n) (38) im Wasser eine Steuereinrichtung vorgesehen ist.

13. Bodeneffekt-Fahrzeug nach Anspruch 8 oder 9, **dadurch gekennzeichnet, dass** der Schraubenantrieb (38) zwei in Längsrichtung voneinander beabstandete, motorisch antreibbare, in den Rumpf einziehbare und aus dem Rumpf ausfahrbare Schiffsschrauben (46) aufweist.

14. Bodeneffekt-Fahrzeug nach Anspruch 8 oder 9, welches als Stauflügel-Fahrzeug ausgebildet ist, **dadurch gekennzeichnet, dass** jeweils eine motorisch antreibbare Schiffsschraube (38) in den rumpfabgewandten Endbereichen eines Flügelpaars (14a, 14b) des Stauflügel-Fahrzeugs (10) vorgesehen ist.

15. Bodeneffekt-Fahrzeug nach Anspruch 11, welches als Stauflügel-Fahrzeug (10) mit Tandemflügeln (12a, 12b; 14a, 14b) ausgebildet ist, **dadurch gekennzeichnet, dass** die Schiffsschrauben (38) jeweils im rumpfabgewandten Endbereich des rückwärtigen Flügelpaars (14a, 14b) angeordnet sind.

16. Bodeneffekt-Fahrzeug nach einem der Ansprüche 1 bis 4, **gekennzeichnet durch** Anordnung eines Fahrwerks nach einem der Ansprüche 5 bis 10 und eines Schraubenantriebs nach einem der Ansprüche 11 bis 13.

17. Bodeneffekt-Fahrzeug nach einem der Ansprüche 2 bis 4 und Anspruch 5, **dadurch gekennzeichnet, dass** der hydraulische Motor (48) als Radnabenmotor ausgebildet ist.

18. Bodeneffekt-Fahrzeug nach einem der Ansprüche 1 bis 17, **dadurch gekennzeichnet, dass** den Antriebs- und Manövriereinheiten hydraulische Betätigungsorgane zum Einziehen und Ausfahren zugeordnet sind.

19. Bodeneffekt-Fahrzeug nach Anspruch 18, **dadurch gekennzeichnet, dass** die hydraulischen Betätigungsorgane von Kolben-Zylinder-Einheiten (36; 44; 64) gebildet werden.

## Claims

1. A ground-effect vehicle, constructed in the form of a ram-wing vehicle, which is movable suspended at a small distance above a water surface or solid substrate by a propeller or nozzle main drive without direct ground contact and which is provided with, at least in part, actively motor driven drive and manoeuvring units, which are retractable during the intended drive of the vehicle by the main drive into its body (R) or the ram wings (14a, 14b) but for movement without the main drive are extendable into or onto the substrate **characterised in that** the motor drive for the actively motor driven actuating and manoeuvring units includes a respective hydraulic drive connecting the drive motor to the associated drive and manoeuvring unit.

2. A ground-effect vehicle as claimed in claim 1, **characterised in that** the hydraulic drive includes at least one hydraulic pump, which is driven by the main drive motor of the ground-effect vehicle (10) or a separate auxiliary drive motor and is connected by means of connecting lines (50; 52) to at least one associated hydraulic motor (48).

3. A ground-effect vehicle as claimed in claim 2, **characterised in that** the hydraulic drive is constructed in the form of a hydrostatic drive with at least one volumetrically operating displacement pump and at least one volumetrically operating displacement motor (48).

4. A ground-effect vehicle as claimed in claim 2 or 3, **characterised in that** the hydraulic drive is of reversible type for the purpose of reversing the direction of rotation of the hydraulic motor (48) or the hydraulic motors (48).

5. A ground-effect vehicle as claimed in one of claims 1 to 4, **characterised in that** the drive and manoeuvring units include a wheeled chassis with at least one steerable nose wheel (22) arranged approximately centrally in the front region of the body (R) in the driving direction, and two tail wheels (30) arranged offset in the rear region on opposite sites of the perpendicular longitudinal central plane of the body (R).

6. A ground-effect vehicle as claimed in claim 5, **characterised in that** at least a proportion of the wheels (28; 30) of the wheeled chassis may be coupled to the motor drive.

7. A ground-effect vehicle as claimed in claim 5 or 6, **characterised in that** at least a proportion of the wheels (28; 30) of the wheeled chassis is provided with braking devices.

8. A ground-effect vehicle as claimed in one of claims 5 to 7, **characterised in that** the nose wheel (28) or the nose wheels is or are arranged at the ground end of a support shaft (40) extending substantially perpendicular to the substrate, that the support shaft (40) is retractable into the body (R) and extendable out of the body (R) and is mounted to be rotatable in the body about its longitudinal central axis, at least in the extended state, and that a steering device is provided to alter the relative rotational position of the support axis in the body for the directional control of the vehicle when driving on a solid substrate.

9. A ground-effect vehicle as claimed in one of claims 2 to 8, which is constructed in the form of a ram-wing vehicle (10) with tandem wings (12a; 12b; 14a; 14b), **characterised in that** the tail wheels (30) are arranged in the end region remote from the body of the rear pair of wings (14a; 14b).

10. A ground-effect vehicle as claimed in claim 9, **characterised in that** the tail wheels (30) are mounted on or in the respective wing to be retractable into the interior of the rear pair of wings (14a; 14b) and extendable into a position projecting from the underside of the wings.

11. A ground-effect vehicle as claimed in one of claims 1 to 4, **characterised in that** the drive and manoeuvring units include a screw drive (38) with at least one, and preferably two spaced, motor driven propeller(s) (46) arranged on the body (R) or the ram wings (14a; 14b).

12. A ground-effect vehicle as claimed in claim 11, **characterised in that** at least one of the motor driven propellers (46) is or are mounted to be rotatable about a support shaft (40) extending substantially perpendicular to the water surface, in the extended position in which it extends into the water, and that a steering device is provided to alter the relative rotary position of the support shaft (40) in the body (R) for the directional control of the vehicle (10), when being driven in the water by the propeller(s) (38).

13. A ground-effect vehicle as claimed in claim 8 or 9, **characterised in that** the propeller drive (38) includes two motor driven propellers (46), which are spaced from one another in the longitudinal direction and are retractable into the body and extendable out of the body.

14. A ground-effect vehicle as claimed in claim 8 or 9 which is constructed in the form of a ram-wing vehicle, **characterised in that** provided in the end region, remote from the body, of a pair of wings (14a; 14b) of the spoiler wing vehicle (10) there is a respective motor driven propeller (38).

15. A ground-effect vehicle as claimed in claim 11, which is constructed in the form of a ram-wing vehicle (10) with tandem wings (12a; 12b; 14a; 14b), **characterised in that** the propellers (38) are arranged in respective end regions remote from the body of the rear pair of wings (14a; 14b).

16. A ground-effect vehicle as claimed in one of claims 1 to 4, **characterised by** the provision of a chassis as claimed in one of claims 5 to 10 and a propeller drive as claimed in one of claims 11 to 13.

17. A ground-effect vehicle as claimed in one of claims 2 to 4 and claim 5, **characterised in that** the hydraulic motor is constructed in the form of a wheel hub motor.

18. A ground-effect vehicle as claimed in one of claims 1 to 17, **characterised in that** hydraulic actuating elements for retracting and extending are associated with the drive and manoeuvring units.

19. A ground-effect vehicle as claimed in claim 18, **characterised in that** the hydraulic actuating elements are constituted by piston/cylinder units (36; 44; 64).

## Revendications

1. Véhicule à effet de sol constitué d'un véhicule à ailes dynamiques (10), pouvant se déplacer en planant par effet de sol à faible distance au-dessus d'une surface d'eau ou d'un sol terne à l'aide d'un moyen de propulsion à hélice ou à réaction sans contact direct avec le sol, qui est pourvu d'unités de propulsion et de manoeuvre qui peuvent, pendant la propulsion normale du véhicule par le moyen principal de propulsion, être rentrées dans le fuselage (R) ou les ailes dynamiques (14a, 14b) de celui-ci, mais peuvent, pour un mouvement sans moyen de propulsion principal, être sorties dans ou sur le sol, et peuvent être entraînées au moins en partie activement par moteur,
**caractérisé par le fait**
**que** le moyen d'entraînement à moteur pour les unités de commande et de manoeuvre entraînées activement par moteur présente un moyen d'entraînement hydraulique qui relie le moteur d'entraînement à l'unité de propulsion et de manoeuvre associée.

2. Véhicule à effet de sol selon la revendication 1, **caractérisé par le fait que** le moyen d'entraînement hydraulique présente au moins une pompe hydraulique entraînée par le moteur de propulsion principal du véhicule à effet de sol (10) ou par un moteur de propulsion auxiliaire séparé et reliée par des conduites de liaison (50 ; 52) à au moins un moteur hydraulique associé (48).

3. Véhicule à effet de sol selon la revendication 2, **caractérisé par le fait que** le moyen d'entraînement hydraulique est constitué d'un moyen d'entraînement hydrostatique comprenant au moins une pompe volumétrique et au moins un moteur volumétrique (48).

4. Véhicule à effet de sol selon l'une des revendications 2 et 3, **caractérisé par le fait que** le moyen d'entraînement hydraulique est réversible pour le changement du sens de rotation du moteur hydraulique (48) ou des moteurs hydrauliques (48).

5. Véhicule à effet de sol selon l'une des revendications 1 à 4, **caractérisé par le fait que** les unités de propulsion et de manoeuvre présentent un train d'atterrissage à roues comportant au moins une roue avant directrice (28) placée à peu près au milieu dans la partie avant, dans le sens de marche, du fuselage (R) et deux roues arrière (30) placées, déportées dans la partie arrière, sur des côtés opposés de l'axe longitudinal vertical du fuselage (R).

6. Véhicule à effet de sol selon la revendication 5, **caractérisé par le fait qu'**au moins une partie des roues (28 ; 30) du train d'atterrissage peuvent être accouplées au moyen d'entraînement à moteur.

7. Véhicule à effet de sol selon l'une des revendications 5 et 6, **caractérisé par le fait qu'**au moins une partie des roues (28 ; 30) du train d'atterrissage sont pourvues de dispositifs de freinage.

8. Véhicule à effet de sol selon l'une des revendications 5 à 7, **caractérisé par le fait que** la roue avant (28) est placée ou les roues avant sont placées à l'extrémité côté sol d'un essieu porteur (40) qui s'étend sensiblement perpendiculairement au sol, que l'essieu porteur (40) peut être rentré dans le fuselage (R) et en être sorti et, au moins à l'état sorti, peut tourner autour de son axe longitudinal dans le fuselage, et qu'un dispositif de commande est prévu pour le changement de la position angulaire relative de l'essieu porteur dans le fuselage pour la commande de direction du véhicule lors de la marche sur sol solide.

9. Véhicule à effet de sol selon l'une des revendications 2 à 8, qui, comme véhicule à ailes dynamiques (10), a des ailes en tandem (12a, 12b ; 14a, 14b), **caractérisé par le fait que** les roues arrière (30) sont placées dans la partie d'extrémité opposée au fuselage de la paire d'ailes arrière (14a, 14b).

10. Véhicule à effet de sol selon la revendication 9, **caractérisé par le fait que** les roues arrière (30) sont montées sur ou dans l'aile respective de façon à pouvoir être rentrées à l'intérieur de la paire d'ailes arrière (14a, 14b) et sorties dans une position dépassant du dessous des ailes.

11. Véhicule à effet de sol selon l'une des revendications 1 à 4, **caractérisé par le fait que** les unités de propulsion et de manoeuvre présentent un moyen de propulsion à hélice(s) (38) comportant au moins une, de préférence deux hélices de bateau (46) placées espacées sur le fuselage (R) ou les ailes dynamiques (14a, 14b) et entraînées par moteur.

12. Véhicule à effet de sol selon la revendication 11, **caractérisé par le fait qu'**au moins une des hélices de bateau (46) entraînées par moteur, en position sortie et immergée dans l'eau, est montée de façon à pouvoir tourner autour d'un essieu porteur (40) s'étendant sensiblement perpendiculairement à la surface de l'eau, et qu'un dispositif de commande est prévu pour le changement de la position angulaire relative de l'essieu porteur (40) dans le fuselage (R) pour la commande de direction du véhicule (10) lors de la propulsion par l'hélice ou les hélices de bateau (38) dans l'eau.

13. Véhicule à effet de sol selon l'une des revendications 8 et 9, **caractérisé par le fait que** le moyen de propulsion à hélice(s) (38) présente deux hélices de bateau (46) espacées dans la direction longitudinale, entraînées par moteur et pouvant être rentrées dans le fuselage et sorties de celui-ci.

14. Véhicule à effet de sol selon l'une des revendications 8 et 9, qui est un véhicule à ailes dynamiques, **caractérisé par le fait qu'**une hélice de bateau (38) entraînée par moteur est prévue dans chacune des parties d'extrémité opposées au fuselage d'une paire d'ailes (14a, 14b) du véhicule à ailes X (10).

15. Véhicule à effet de sol selon la revendication 11, qui est un véhicule à ailes dynamiques (10) à ailes en tandem (12a, 12b ; 14a, 14b), **caractérisé par le fait que** les hélices de bateau (38) sont placées dans la partie d'extrémité opposée au fuselage de la paire d'ailes arrière (14a, 14b).

16. Véhicule à effet de sol selon l'une des revendications 1 à 4, **caractérisé par** une disposition d'un train d'atterrissage selon l'une des revendications 5 à 10 et d'un moyen de propulsion à hélices selon l'une des revendications 11 à 13.

17. Véhicule à effet de sol selon l'une des revendications 2 à 4 et la revendication 5, **caractérisé par le fait que** le moteur hydraulique (48) est un moteur au moyeu de roue.

18. Véhicule à effet de sol selon l'une des revendications 1 à 17, **caractérisé par le fait qu'**aux unités de propulsion et de manoeuvre sont associés des organes de commande hydrauliques pour la rentrée et la sortie.

19. Véhicule à effet de sol selon la revendication 18, **caractérisé par le fait que** les organes de commande hydrauliques sont des vérins (36 ; 44 ; 64).
